# FASCICULE DE BREVET EUROPEEN

(11) **EP 2 895 338 B1**
(45) Date de publication et mention de la délivrance du brevet: **22.02.2017**
(21) Numéro de dépôt: 13759525.2
(22) Date de dépôt: 09.09.2013
(51) Int. Cl.: B60C 11/03, B60C 11/12

(54) **BANDE DE ROULEMENT ET PNEU POUR POIDS LOURD**
SCHWERLASTLAUFSTREIFEN UND -RAD
HEAVY DUTY TREAD AND TIRE

(30) Priorité: 13.09.2012 FR 1258596
(43) Date de publication de la demande: 22.07.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MARTIN, Vincent, F-63040 Clermont-Ferrand Cedex9 (FR); BARDIN, Damien, F-63040 Clermont-Ferrand Cedex9 (FR); HOUIS, Catherine, F-63040 Clermont-Ferrand Cedex9 (FR)
(74) Mandataire: Diernaz, Christian
(86) Numéro de dépôt international: PCT/EP2013/068642
(87) Numéro de publication internationale: WO 2014/040958

(56) Documents cités:
- EP-A2- 0 335 694
- WO-A1-2010/030276
- FR-A1- 2 940 185
- FR-A1- 2 971 732

## Description

### DOMAINE DE L'INVENTION

La présente invention concerne le domaine des bandes de roulement de pneu et plus spécifiquement des bandes de roulement de pneu pour véhicules de type poids lourd, ces bandes de roulement ayant une surface de roulement dont la géométrie change avec l'usure.

### ÉTAT DE LA TECHNIQUE

La bande de roulement d'un pneu correspond à la partie du pneu située radialement à l'extérieur et s'étendant dans la direction circonférentielle et pour assurer le contact entre le pneu et la chaussée et permettre la transmission d'efforts. Le contact entre la bande de roulement de pneu et la chaussée forme une empreinte de contact. La bande de roulement a pour fonction de fournir une adhérence suffisante au pneu afin d'empêcher le glissement du pneu, un glissement pouvant survenir lors de manoeuvres d'accélération, de freinage ou de virage. Une bande de roulement de pneu comprend des creux sous forme de rainures délimitant des éléments de relief, tels que des nervures ou des blocs. En outre, ces éléments de relief peuvent être pourvus d'incisions, c'est-à-dire des sortes de découpures délimitées par des parois de matière, ces parois étant distantes l'une de l'autre d'une faible distance appropriée pour que lors du passage dans le contact lesdites parois viennent en contact au moins en partie l'une contre l'autre. Ces incisions ont pour fonction de créer des arêtes additionnelles utiles notamment pour couper une éventuelle couche de liquide présente sur la chaussée, tout en conservant une quantité de matière caoutchoutique importante. Ces incisions peuvent comporter, sur les parois les délimitant, des moyens pour limiter les mouvements relatifs desdites parois. L'ensemble des rainures et incisions constitue un ensemble d'arêtes sur la surface de roulement selon une géométrie initiale, cette géométrie initiale pouvant rester inchangée quel que soit le niveau d'usure ou pouvant varier avec l'usure afin d'optimiser le fonctionnement de la bande en fonction de l'épaisseur de matière restante.

Un problème posé aux fabricants de pneus est de maintenir les performances des pneus tout au long de leur utilisation, c'est-à-dire quel que soit le niveau d'usure de la bande de roulement. Dans un tel but il a été proposé de faire évoluer la géométrie des arêtes d'une bande de roulement avec l'usure : le document WO 2010072523-A1 décrit une bande de roulement selon le préambule de la revendication 1 présentant une telle évolution avec l'usure.

Dans cette demande de brevet, on décrit une bande de roulement de pneu qui, après usure partielle, renouvelle en partie le volume des rainures sans pour autant altérer la performance du pneu. Pour cela, la bande comprend au moins un canal formé sous la surface de roulement à l'état neuf, chaque canal étant destiné à apparaître après une usure partielle pour former une nouvelle rainure utile au drainage de l'eau par temps de pluie.

Grâce à ce type de conception de bande de roulement, on peut réduire les profondeurs des rainures à l'état neuf en faisant apparaître de nouvelles rainures après une usure partielle de la bande de roulement. On limite ainsi de façon sensible la compressibilité de la bande et par voie de conséquence on réduit la dissipation d'énergie dans la bande à l'état neuf, ce qui est favorable d'un point de vue consommation.

Le même document de brevet WO 2010072523-A1 prévoit la possible présence d'une incision de même orientation que celle du canal, cette incision étant située entre le canal et la surface de roulement. Grâce à cette incision, le moulage et le démoulage s'en trouvent facilités.

Ce même document prévoit en outre la présence d'une pluralité d'incisions coupant l'incision surmontant un canal, c'est-à-dire que ces incisions ont une direction distincte de la direction de l'incision surmontant le canal.

Pour améliorer la tenue mécanique des éléments moulants mis en place de le moule pour mouler ces incisions, il est connu de prévoir la présence de parties de renfort, chaque partie de renfort moulant dans la bande de roulement une cavité débouchant à la fois sur la surface de roulement à l'état neuf et dans un canal. Si ces cavités sont favorables à l'évacuation de chaleur dans la bande de roulement lors du roulage en générant une ventilation dans les canaux, il peut se produire une pénétration de corps étrangers comme par exemple des cailloux. Une fois ces corps étrangers introduits dans une cavité, il a été constaté qu'ils peuvent se déplacer en direction d'un canal et y demeurer jusqu'à un niveau d'usure approprié pour voir se former une nouvelle rainure. Entre temps, ces corps étrangers vont pouvoir agresser la paroi délimitant le canal et éventuellement agresser la partie du pneu située radialement au-dessous de la bande de roulement, c'est-à-dire l'armature de sommet.

Le document WO 2010/030276 A1 montre une telle réalisation. Dans cet exemple, il est montré notamment à la figure 4 une intersection de deux surfaces, l'une de ces surfaces délimitant un puits cylindrique sans aucune variation de géométrie dans la profondeur.

### Définitions :

Le taux de creux d'une sculpture est égal au rapport entre la surface des creux (rainures) délimités par les blocs et la surface totale (surface de contact des blocs et surface des creux). Un taux de creux faible indique une grande surface de contact des blocs et une faible surface de creux entre les blocs.

Le taux de creux surfacique d'une sculpture est égal au rapport entre la surface des creux (essentiellement formés par des rainures) délimités par les éléments de relief (blocs, nervures) et la surface totale (surface de contact des éléments de relief et surface des creux). Un taux de creux faible indique une grande surface de contact de la bande de roulement et une faible surface de creux entre les éléments de relief.

Le taux de creux volumique d'une sculpture d'une bande de roulement à l'état neuf est égal au rapport entre le volume des creux (formés notamment par des rainures, des cavités) délimités par les éléments de relief (blocs, nervures) et le volume total de la bande de roulement comprenant le volume de matière à user et le volume des creux. Un taux de creux volumique faible indique un faible volume de creux relativement au volume de la bande de roulement. Pour chaque niveau d'usure, on peut également définir un volume de creux.

Plan médian équatorial : c'est un plan perpendiculaire à l'axe de rotation et passant par les points du pneu radialement les plus éloignés dudit axe.

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par axialement vers l'extérieur, on entend une direction qui est orientée vers l'extérieur de la cavité interne du pneu.

L'épaisseur totale E d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale PMU de matière à user en roulage, cette épaisseur maximale PMU étant inférieure à l'épaisseur totale E de la bande.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

L'empreinte de contact avec la chaussée est réalisée avec le pneu en statique ; à partir de cette empreinte on calcule une valeur moyenne de longueur d'empreinte dans la direction circonférentielle.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Par dimensions principales de la section d'une cavité ou d'un puits, on entend ici son diamètre si cette cavité a une section de forme circulaire, les longueurs de ses petit et grand axes si sa section est ovale ou ses largeur et longueur s'il est de section rectangulaire. Par direction principale d'une cavité ou d'un puits, on entend ici la direction rectiligne moyenne de la cavité ou du puits entre la surface de roulement à l'état neuf sur laquelle la cavité ou le puits s'ouvre à une de ses extrémités et un canal formé à l'intérieur de la bande dans lequel la cavité ou le puits s'ouvre à son autre extrémité.

### BREF EXPOSÉ DE L'INVENTION

La présente invention vise à réduire le risque d'agression par des corps étrangers pouvant pénétrer dans la bande de roulement notamment en s'introduisant dans les puits formés au croisement de deux incisions formées sur cette bande.

À cet effet, l'invention a pour objet une bande de roulement pour pneu, cette bande ayant une surface de roulement destinée à venir en contact avec une chaussée et une épaisseur totale PMU de matière à user en roulage, cette bande comprenant une pluralité de découpures s'ouvrant sur la surface de roulement à l'état neuf et au moins un canal interne à la bande de roulement, ce canal et destiné à former une nouvelle rainure après une usure partielle de la bande.

En outre, chaque canal est prolongé radialement vers la surface de roulement par une incision de même orientation que ledit canal et de largeur L4, et de plus une pluralité d'incisions de largeur L3 coupent l'incision prolongeant chaque canal pour former une région de croisement sous la forme d'un puits, ce puits s'ouvrant à la fois sur la surface de roulement à l'état neuf et dans un canal.

La bande de roulement selon l'invention est telle qu'une pluralité de puits sont formés, chaque puits présentant - selon une direction allant de la surface de roulement vers le canal, au moins une partie de section maximale et une partie de section réduite, la partie de section réduite ayant une aire de section inférieure à l'aire de section de la partie de section maximale afin de limiter l'introduction de corps étrangers de dimensions déterminées dans ce puits et ce jusqu'à un canal. La bande de roulement selon l'invention est caractérisée en ce que la partie de section maximale a une aire supérieure au produit L3 fois L4 des largeurs L3, L4 des incisions se croisant pour former un puits.

Cette disposition présente outre la protection de la bande de roulement, l'avantage de faciliter et rendre plus résistante la fabrication lors du moulage. En effet, les lames servant au moulage des incisions sont reliées entre elles par des parties formant une sorte de renfort optimisé, ces parties moulant les puits sur la bande de roulement.

Préférentiellement et pour au moins une pluralité de puits la section réduite de chaque puits est localisée à l'intérieur de la bande de roulement à l'état neuf; c'est-à-dire que cette section réduite ne s'ouvre pas sur la surface de roulement à l'état neuf mais qu'elle s'ouvre sur une nouvelle surface de roulement après une usure partielle de la bande.

Avantageusement, chaque partie de section minimale est apte à se fermer complètement lors du passage dans le contact avec une chaussée en roulage aux conditions d'usage, afin de bloquer complètement le passage de tout corps étranger.

Préférentiellement au moins 50% et encore plus préférentiellement au moins 75% des puits s'ouvrant dans un même canal présentent au moins une partie de section maximale et au moins une partie de section réduite. Encore plus préférentiellement, toutes les régions de croisement associées à un même canal comportent au moins une partie de section réduite et au moins une partie de section maximale.

On a en effet noté que statistiquement le nombre d'agressions liées à l'introduction de corps étrangers dans les canaux était substantiellement réduit dû au seul fait de former au moins 50% des régions de croisement avec au moins une partie de section réduite et au moins une partie de section maximale. Cet effet bénéfique va croissant avec le nombre de régions de croisement comportant une section réduite.

Avantageusement, la section minimale est au plus égale à 50% de la section d'aire maximale, et encore plus avantageusement au plus égale à 10%.

Dans une autre variante préférentielle, la section d'aire minimale est proche de ou égale à zéro.

Dans une variante préférentielle, la hauteur de la partie de section minimale est au moins égale à 1 mm.

Grâce à cette invention, il est possible d'obtenir une bonne tenue mécanique aux lames moulant des découpures sans pour autant rendre le pneu pourvu de cette bande plus sensible aux agressions par des corps étrangers pouvant s'introduire dans les régions de croisement.

Si les incisions se croisant peuvent avoir des profondeurs différentes, l'invention s'applique sur la partie commune aux deux incisions.

Avantageusement, la section minimale d'une région de croisement est encadrée par deux parties de section maximale, une première partie de section maximale s'ouvrant sur la surface de roulement à l'état neuf et l'autre partie de section maximale s'ouvrant dans un canal.

Dans une variante intéressante, un puits formant une région de croisement d'incisions peut avoir une forme à section continûment variable, par exemple décroissante en partant de la surface de roulement à l'état neuf et ensuite croissante pour s'ouvrir dans un canal. Selon cette variante, la partie de section réduite comprend la partie de la région de croisement dont l'aire de section est minimale.

Avantageusement, la partie de section réduite d'un puits est décalée de l'axe principal de ce puits d'au moins une partie de section maximale de manière à prévenir une éventuelle migration de corps étrangers de la partie de section maximale à l'intérieur de la partie de section réduite, cette migration se faisant moins facilement lorsque l'ouverture de la partie de section réduite dans la partie de section maximale se fait près des limites de cette partie de section maximale.

Dans une autre variante intéressante, et pour un même canal, il est formé une succession régions de croisement au moins deux de ces régions de croisement étant géométriquement différentes de par la position de la partie de section réduite dans la direction de la profondeur de la région de croisement. Cette disposition permet d'éviter l'apparition simultanée de toutes les parties de même section et est donc favorable pour obtenir une usure uniformément répartie sur le tour de roue lorsque ces régions de croisement sont réparties dans la direction circonférentielle.

Il est proposé un pneu pourvu d'une bande de roulement formée selon l'une des réalisations préconisées par l'invention. Bien sûr, il est possible de combiner la présence dans un même pneu de puits de différentes géométries.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue en plan d'une sculpture d'une bande de roulement selon l'invention ;
La figure 2 représente une vue en coupe dans un plan de coupe repéré par la ligne II-II sur la figure 1 ;
La figure 3 montre une coupe d'une cavité selon l'invention ;
La figure 4 montre une variante de cavité selon l'invention ;
La figure 5 montre une autre variante de cavité selon l'invention ;
La figure 6 montre en coupe longitudinale une répartition de cavités selon l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

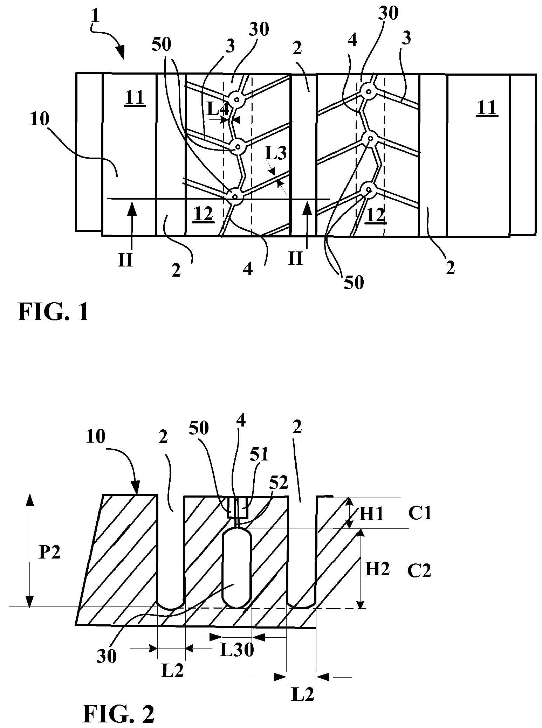

La figure 1 montre une vue partielle d'une bande de roulement 1 d'un pneu construite selon l'invention. Cette bande 1, représentée ici à l'état neuf non usée. comprend une sculpture formée par trois rainures principales 2 orientées circonférentiellement (ou de manière équivalente : longitudinalement). Les rainures principales 2 délimitent des nervures intermédiaires 12 et deux nervures de bord 11. Ces rainures principales 2 débouchent sur une surface de roulement 10 à l'état neuf destinée à être en contact avec la chaussée pendant le roulage d'un pneu pourvu de ladite bande.

Dans cet état neuf, les rainures principales 2 ont une même profondeur P2 et une largeur L2 et sont utiles notamment pour drainer l'eau présente sur la chaussée par temps de pluie. On distingue en outre, sur cette figure 1, la présence de canaux 30 orientés circonférentiellement. Ces canaux 30 sont formés à l'intérieur de la bande et dans les deux nervures intermédiaires 12 ; en outre, ces canaux 30 sont prolongés vers la surface de roulement 10 à l'état neuf par des incisions 4 de largeur moyenne L4. Ces incisions 4 d'orientation générale circonférentielle sont coupées par des incisions 3 de largeur moyenne L3 débouchant dans les rainures principales 2.

Chaque incision 4 croise les incisions 3 d'une même nervure selon une pluralité de zones de croisement. Chaque zone de croisement forme un puits 50 reliant la surface de roulement à l'état neuf 10 à un canal 30 radialement sous ladite surface de roulement.

Sur la figure 2, on montre une coupe selon un plan de coupe repéré par sa trace II-II sur la surface de roulement 10 de la bande de roulement montrée avec la figure 1. Sur cette coupe, on voit que les canaux 30 sont à une distance H1 de la surface de roulement à l'état neuf : cette épaisseur H1 définit une première couche d'usure C1 dans laquelle seules les rainures principales 2 sont présentes et actives. Les canaux 30 ont une hauteur H2 mesurée selon l'épaisseur de la bande : cette hauteur H2 définit une deuxième couche d'usure C2 qui rend actif à la fois les rainures principales 20 et de nouvelles rainures formées dès que l'usure de la bande est au moins égale à la hauteur H1. Chaque canal 30 a une largeur L30 sensiblement égale à la largeur L2 des rainures principales 2.

Ainsi, on augmente sensiblement la surface de rainure en contact avec la chaussée (et les longueurs d'arêtes en proportion), tout en retrouvant un volume de rainures sensiblement identique à ce qu'il était à l'état neuf.

On voit que le puits 50 est formé - selon une direction allant de la surface de roulement vers le canal, de deux parties, une première partie de section maximale 51 et une deuxième partie de section réduite 52, la partie de section maximale 51 s'ouvrant sur la surface de roulement à l'état neuf 10. La partie de section réduite 52 a une aire de section inférieure à l'aire de section de la partie de section maximale 51. Grâce à cette disposition, il est possible de limiter l'introduction de corps étrangers de dimensions déterminées dans ce puits de la surface de roulement jusqu'au canal sans pour autant pénaliser la fabrication de la bande ainsi que la fabrication du moule pour mouler ladite bande. La partie de section réduite a une section circulaire de diamètre inférieur à 1 mm tandis que les autres parties de section maximale sont de forme circulaire de diamètre égal à 5 mm. Les incisions 3, 4 ont des largeurs L3, L4 égales à 0.6 mm.

La partie de section maximale a une aire supérieure au produit des largeurs moyennes L3, L4 des incisions convergeant vers chaque puits 50.

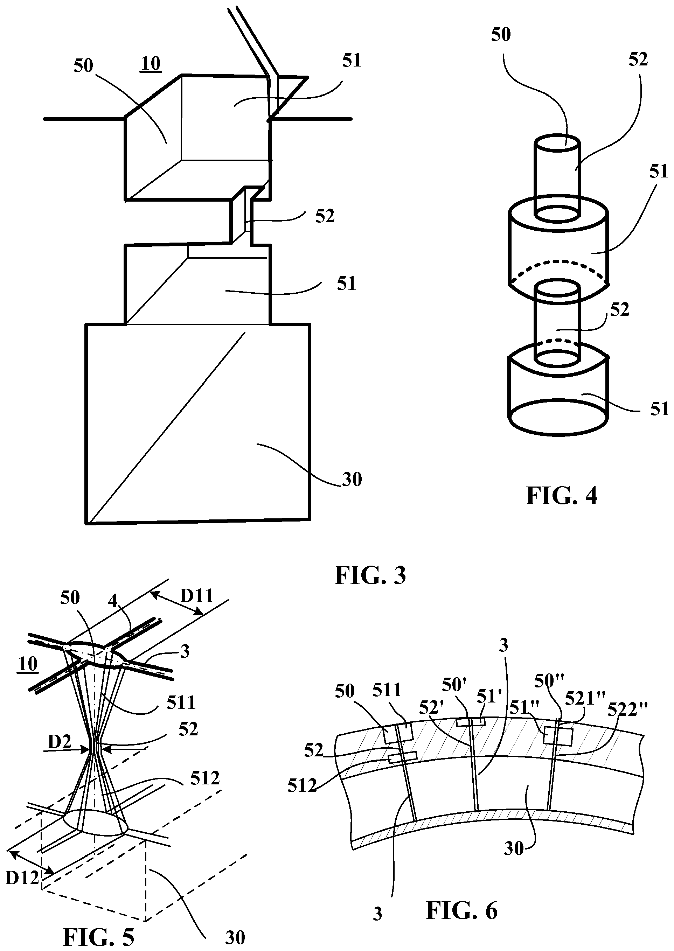

Dans une variante montrée en coupe avec la figure 3, le puits 50 - vers lequel convergent plusieurs incisions (une seule étant partiellement représentée ici), comprend deux parties de section maximale 51 encadrant une partie de section réduite 52. La partie de section réduite a une section carrée de côté égal à 1 mm tandis que les autres parties de section maximale sont de forme carrée de côté égal à 5 mm. Dans ce cas particulier, la partie de section réduite 52 est désaxée par rapport aux deux autres parties de section maximale 51, lesquelles ont un axe commun. Ce puits 50 relie la surface de roulement 10 à l'état neuf à un canal 30.

La figure 4 montre une variante de puits 50 selon l'invention comprenant une alternance de parties de section maximale 51 et de parties de section réduite 52, une partie de section réduite 51 s'ouvrant sur la surface de roulement 10 à l'état neuf. Les profondeurs des différentes parties sont, dans le cas montré, égales entre elles ; bien sûr, on peut envisager de diminuer les profondeurs des parties de section réduite afin d'augmenter le volume de creux disponible pour capter un liquide présent sur la chaussée. Sur ce puits 50, des incisions - non représentées - convergent pour se croiser. Dans la présente variante, les différentes parties sont positionnées sur un même axe ; on peut bien sûr former ces mêmes parties de manière à les désaxer les unes par rapport aux autres comme dans la variante montrée avec la figure 3.

La figure 5 montre une variante de puits 50 à l'intersection de deux incisions, ce puits 50 s'ouvrant sur la surface de roulement 10 à l'état neuf à une de ses extrémités et dans un canal 30 à son autre extrémité. Ce puits 50 présente une forme de section variable sur quasiment toute sa profondeur : une première partie de section maximale 511 s'ouvre sur la surface de roulement par une section maximale de diamètre D11 et se raccorde à une partie de section cylindrique de petite section 52 de diamètre D2, ce dernier diamètr étant bien plus petit que le diamètre D11. Radialement à l'intérieur de la partie 52 de section cylindrique de diamètre D2, on voit une partie de section 512 s'élargissant progressivement jusqu'à avoir un diamètre D12 bien supérieur au diamètre D2, cette partie s'ouvrant dans un canal 30.

La figure 6 montre une coupe d'une bande de roulement d'un pneu selon l'invention, cette coupe étant réalisée dans un plan perpendiculaire à l'axe de rotation du pneu. Cette coupe est prise sur une nervure contenant un canal 30 sous la surface de roulement, ce canal 30 se prolongeant vers ladite surface de roulement par une incision d'orientation circonférentielle. En outre, cette incision circonférentielle est coupée par une pluralité d'incisions d'orientation transversale 3 dont on voit les traces sur la figure 6. Il est formé aux intersections de ces incisions transversales 3 avec une incision circonférentielle, des puits 50, 50', 50". Un puits 50 est formé de deux parties de section maximale 511 et 512 encadrant une partie de section réduite 52. Un autre puits 50' comprend une partie de section élargie 51' s'ouvrant sur la surface de roulement à l'état neuf et se prolongeant par une partie de section réduite 52' s'ouvrant dans le canal 30. Un autre puits 50" comprend deux parties de section réduite 521" et 522" encadrant une partie de section maximale 51". Une telle disposition, répartissant les parties de section élargies et les parties de section réduite de manière décalée entre les puits d'une mme nervure, permet d'homogénéiser l'usure de la bande de roulement. Il est ainsi formé une succession de puits, dont au moins deux de ces puits sont géométriquement différents de par la position de la partie de section réduite dans la direction de la profondeur de la région de croisement.

Au terme de cet exposé de plusieurs variantes, il n'est pas inutile de préciser que l'invention ne saurait être limitée à ces variantes décrites et représentées et bien entendu, diverses modifications peuvent y être apportées sans sortir du cadre défini par les revendications. En particulier, toutes les variantes décrites peuvent être adaptées afin que les parties de section réduite puissent se fermer en totalité lors du passage dans le contact en les réalisant avec des sections et des hauteurs appropriées.

## Revendications

1. Bande de roulement (1) pour pneu poids lourd, cette bande ayant une surface de roulement (10) à l'état neuf destinée à venir en contact avec une chaussée et une épaisseur totale PMU de matière à user en roulage, cette bande comprenant une pluralité de découpures s'ouvrant sur la surface de roulement à l'état neuf et au moins un canal interne (30) à la bande de roulement, ce canal (30) étant destiné à former une nouvelle rainure après une usure partielle de la bande, en outre, chaque canal (30) est prolongé radialement vers la surface de roulement (10 par une incision (4) de même orientation que ledit canal et de largeur L4, et de plus une pluralité d'incisions (3) de largeur L3 coupent l'incision prolongeant chaque canal pour former un puits (50), ce puits s'ouvrant à la fois sur la surface de roulement (10) à l'état neuf et dans un canal (30), la bande de roulement étant telle que, pour au moins pour une pluralité de puits (50), chaque puits présente - selon une direction allant de la surface de roulement (10) vers le canal (30), au moins une partie de section maximale (51) et une partie de section réduite (52), la partie de section réduite (52) ayant une aire de section inférieure à l'aire de section de la partie de section maximale (51) afin de limiter l'introduction de corps étrangers de dimensions déterminées dans ce puits et ce jusqu'à un canal, la bande de roulement étant **caractérisée en ce que** la partie de section maximale (51) d'un puits (50) a une aire supérieure au produit L3 fois L4 des largeurs L3, L4 des incisions (3, 4) se croisant pour former un puits (50)..

2. Bande de roulement (1) selon la revendication 1 **caractérisée en ce qu'**au moins 50% des puits (50) s'ouvrant dans un même canal (30) présentent au moins une partie de section maximale (51) et une partie de section réduite (52) et plus préférentiellement au moins 75% et encore plus préférentiellement la totalité des puits (50) formés sur ladite bande présentent au moins une partie de section maximale (51) et une partie de section réduite (52).

3. Bande de roulement (1) selon l'une des revendications 1 à 2 **caractérisée en ce que** pour une pluralité de puits (50) la section réduite (52) ne s'ouvre pas sur la surface de roulement (10) à l'état neuf de la bande de roulement.

4. Bande de roulement (1) selon l'une des revendications 1 à 3 **caractérisée en ce que** chaque partie de section minimale (52) d'un puits (50) est apte à se fermer complètement lors du passage dans le contact avec une chaussée en roulage aux conditions d'usage, afin de bloquer complètement le passage de tout corps étranger.

5. Bande de roulement selon l'une des revendications 1 à 4 **caractérisée en ce que** l'aire de la section minimale (52) d'un puits (50) est au plus égale à 50% de l'aire de la section maximale (51) de ce puits, et préférentiellement au plus égale à 10%.

6. Bande de roulement selon l'une des revendications 1 à 5 **caractérisée en ce que** la hauteur de la partie de section minimale (52) d'un puits (50) est au moins égale à 1 mm.

7. Bande de roulement selon l'une des revendications 1 à 6 **caractérisée en ce que** la section minimale d'un puits (50) est encadrée par deux parties de section maximale (51), une première partie de section maximale s'ouvrant sur la surface de roulement (10) à l'état neuf et l'autre partie de section maximale s'ouvrant dans un canal.

8. Bande de roulement selon l'une des revendications 1 à 7 **caractérisée en ce que** la partie de section réduite (52) d'au moins un puits (50) est décentrée de l'axe principal du puits d'au moins une partie de section maximale de ce puits.

9. Bande de roulement selon l'une des revendications 1 à 8 **caractérisée en ce que** pour un même canal (30), il est formé une succession de puits (50) au moins deux de ces puits étant géométriquement différents de par la position de la partie de section réduite (52) dans la direction de la profondeur du puits (50).

10. Pneu comportant une bande de roulement selon l'une des revendications 1 à 9.

## Patentansprüche

1. Laufstreifen (1) für Schwerlastwagenreifen, wobei dieser Streifen eine Lauffläche (10) im Neuzustand, die dazu bestimmt ist, mit einer Straße in Kontakt zu kommen, und eine Gesamtdicke PMU von beim Fahren abzunutzendem Material hat, wobei dieser Streifen eine Vielzahl von Ausschnitten, die sich im Neuzustand an der Lauffläche öffnen, und mindestens einen Kanal (30) im Inneren des Laufstreifens enthält, wobei dieser Kanal (30) dazu bestimmt ist, nach einer teilweisen Abnutzung des Streifens eine neue Rille zu bilden, außerdem wird jeder Kanal (30) radial zur Lauffläche (10) durch einen Einschnitt (4) gleicher Ausrichtung wie der Kanal und einer Breite L4 verlängert, und außerdem schneidet eine Vielzahl von Einschnitten (3) einer Breite L3 den jeden Kanal verlängernden Einschnitt, um einen Schacht (50) zu formen, wobei dieser Schacht sich sowohl an der Lauffläche (10) im Neuzustand als auch in einen Kanal (30) öffnet, wobei der Laufstreifen derart ist, dass für mindestens eine Vielzahl von Schächten (50) jeder Schacht - gemäß einer Richtung von der Lauffläche (10) zum Kanal (30) - mindestens einen Teil maximalen Querschnitts (51) und einen Teil reduzierten Querschnitts (52) aufweist, wobei der Teil reduzierten Querschnitts (52) eine Aufstandsfläche mit einem kleineren Querschnitt als die Querschnittsaufstandsfläche des Teils maximalen Querschnitts (51) hat, um das Einführen von Fremdkörpern bestimmter Abmessungen in diesen Schacht und dies bis zu einem Kanal zu begrenzen, wobei der Laufstreifen **dadurch gekennzeichnet ist, dass** der Teil maximalen Querschnitts (51) eines Schachts (50) eine Aufstandsfläche größer als das Produkt aus L3 mal L4 der Breiten L3, L4 der Einschnitte (3, 4) hat, die sich kreuzen, um einen Schacht (50) zu formen.

2. Laufstreifen (1) nach Anspruch 1, **dadurch gekennzeichnet, dass** mindestens 50% der Schächte (50), die sich in den gleichen Kanal (30) öffnen, mindestens einen Teil maximalen Querschnitts (51) und einen Teil reduzierten Querschnitts (52) aufweisen, und bevorzugter mindestens 75% und noch bevorzugter die Gesamtheit der auf dem Streifen geformten Schächte (50) mindestens einen Teil maximalen Querschnitts (51) und einen Teil reduzierten Querschnitts (52) aufweisen.

3. Laufstreifen (1) nach einem der Ansprüche 1 bis 2, **dadurch gekennzeichnet, dass** für eine Vielzahl von Schächten (50) der reduzierte Querschnitt (52) sich nicht an der Lauffläche (10) im Neuzustand des Laufstreifens öffnet.

4. Laufstreifen (1) nach einem der Ansprüche 1 bis 3, **dadurch gekennzeichnet, dass** jeder Teil minimalen Querschnitts (52) eines Schachts (50) sich beim Übergang in den Kontakt mit einer Straße beim Fahren bei Nutzungsbedingungen vollständig schließen kann, um den Durchgang jedes Fremdkörpers vollständig zu blockieren.

5. Laufstreifen nach einem der Ansprüche 1 bis 4, **dadurch gekennzeichnet, dass** die Aufstandsfläche des minimalen Querschnitts (52) eines Schachts (50) höchstens gleich 50% der Aufstandsfläche des maximalen Querschnitts (51) dieses Schachts, und vorzugsweise höchstens gleich 10% ist.

6. Laufstreifen nach einem der Ansprüche 1 bis 5, **dadurch gekennzeichnet, dass** die Höhe des Teils minimalen Querschnitts (52) eines Schachts (50) mindestens gleich 1 mm ist.

7. Laufstreifen nach einem der Ansprüche 1 bis 6, **dadurch gekennzeichnet, dass** der minimale Querschnitt eines Schachts (50) von zwei Teilen maximalen Querschnitts (51) umrahmt wird, wobei ein erster Teil maximalen Querschnitts sich an der Lauffläche (10) im Neuzustand und der andere Teil maximalen Querschnitts sich in einen Kanal öffnet.

8. Laufstreifen nach einem der Ansprüche 1 bis 7, **dadurch gekennzeichnet, dass** der Teil reduzierten Querschnitts (52) mindestens eines Schachts (50) zur Hauptachse des Schachts um mindestens einen Teil maximalen Querschnitts dieses Schachts dezentriert ist.

9. Laufstreifen nach einem der Ansprüche 1 bis 8, **dadurch gekennzeichnet, dass** für einen gleichen Kanal (30) eine Folge von Schächten (50) geformt wird, wobei mindestens zwei dieser Schächte aufgrund der Stellung des Teils reduzierten Querschnitts (52) in der Richtung der Tiefe des Schachts (50) geometrisch unterschiedlich sind.

10. Reifen, der einen Laufstreifen nach einem der Ansprüche 1 bis 9 aufweist.

## Claims

1. Tread (1) for heavy vehicle tyre, this tread having a tread surface (10) in the new state intended to come into contact with a roadway and a total thickness PMU of material to be worn away during running, this tread comprising a plurality of cuts opening onto the tread surface in the new state and at least one channel (30) internal to the tread, this channel (30) being intended to form a new groove after the tread has partially worn away, furthermore, each channel (30) is extended radially towards the tread surface (10) by a sipe (4) of the same orientation as the said channel and of width L4, and in addition a plurality of sipes (3) of width L3 intersect the sipe extending each channel to form a well (50), this well opening both onto the tread surface (10) in the new state and into a channel (30), the tread being such that, for at least for a plurality of wells (50), each well has - in a direction extending from the tread surface (10) towards the channel (30), at least one maximum-section part (51) and one reduced-section part (52), the reduced-section part (52) having a cross-sectional area smaller than the cross-sectional area of the maximum-section part (51) so as to limit the ingress of foreign bodies of determined dimensions into this well and, from there, into a channel, the tread being **characterized in that** the maximum-section part (51) of a well (50) has a surface area greater than the product L3 times L4 of the widths L3, L4 of the sipes (3, 4) intersecting to form a well (50)..

2. Tread (1) according to Claim 1, **characterized in that** at least 50% of the wells (50) opening into one and the same channel (30) have at least one maximum-section part (51) and one reduced-section part (52) and, more preferably, at least 75% and even more preferably still all of the wells (50) formed on the said tread have at least one maximum-section part (51) and one reduced-section part (52).

3. Tread (1) according to one of Claims 1 to 2, **characterized in that** for a plurality of wells (50) the reduced section (52) does not open onto the tread surface (10) of the tread in the new state.

4. Tread (1) according to one of Claims 1 to 3, **characterized in that** each minimum-section part (52) of a well (50) is able to close up completely as it enters the contact patch in which the tread is in contact with a roadway when running under normal conditions, so as to completely block the ingress of any foreign body.

5. Tread according to one of Claims 1 to 4, **characterized in that** the surface area of the minimum section (52) of a well (50) is at most equal to 50% of the area of the maximum section (51) of this well, and preferably at most equal to 10%.

6. Tread according to one of Claims 1 to 5, **characterized in that** the height of the minimum-section part (52) of a well (50) is at least equal to 1 mm.

7. Tread according to one of Claims 1 to 6, **characterized in that** the minimum section of a well (50) is flanked by two maximum-section parts (51), a first maximum-section part opening onto the tread surface (10) in the new state, and the other maximum-section part opening into a channel.

8. Tread according to one of Claims 1 to 7, **characterized in that** the reduced-section part (52) of at least one well (50) is off-centred from the main axis of the well by at least one maximum-section part of this well.

9. Tread according to one of Claims 1 to 8, **characterized in that** for one and the same channel (30) a succession of wells (50) is formed, at least two of these wells differing geometrically in terms of the position of the reduced-section part (52) in the depthwise direction of the well (50).

10. Tyre comprising a tread according to one of Claims 1 to 9.
